# EUROPÄISCHE PATENTSCHRIFT

(11) **EP 2 298 056 B1**
(45) Veröffentlichungstag und Bekanntmachung des Hinweises auf die Patenterteilung: **28.11.2012**
(21) Anmeldenummer: 10401142.4
(22) Anmeldetag: 18.08.2010
(51) Int. Cl.: A01C 7/08

(54) **Nachfüllsystem**
Refilling system
Système de réapprovisionnement

(30) Priorität: 10.09.2009 DE 102009043969
(43) Veröffentlichungstag der Anmeldung: 23.03.2011
(73) Patentinhaber: Amazonen-Werke H. Dreyer GmbH & Co. KG, 49205 Hasbergen (DE)
(72) Erfinder: Wilken, Martin, 26409 Wittmund (DE); Brüggemann, Klaus, 27777 Ganderkesee (DE); Mertens, Daniel, 26123 Oldenburg (DE)

(56) Entgegenhaltungen:
- EP-A2- 2 044 827
- US-A- 6 093 926
- US-A1- 2008 295 751

## Beschreibung

Die Erfindung betrifft ein Nachfüllsystem gemäß des Oberbegriffes des Patentanspruches 1.

Ein derartiges Nachfüllsystem ist beispielsweise durch die EP 2 044 827 A2 bekannt. Der dem Vereinzelungsorgan zugeordnete Aufnahmebereich für den Saatgutvorrat ist relativ klein ausgestaltet. Um nun jedoch große Flächenleistung zu erreichen zu können, ist ein Vorratstank mit großem Fassungsvermögen vorgesehen, von dem aus über eine Zufuhrschleuse das Saatgut in eine pneumatisch beaufschlagte Förderleitung eingespeist wird. Diese Förderleitung ist als Nachfüllleitung ausgebildet und mündet im oberen Bereich des den Saatgutvorrat im Bereich des Vereinzelungsgehäuses aufnehmenden Saatgutvorratsbehälters aus. Das Nachfüllen des Saatgutvorratsbehälters mit Saatgut findet immer beim Wendevorgang statt. Hierzu wird bei dem bekanten Nachfüllsystem die Druckdifferenz, mit der das Vereinzelungsorgan beaufschlagt wird, und der Luftdruck in den nachzufüllenden Saatgutvorratsbehälter im Bereich des Vereinzelungsorgans abgesenkt. Während der abgesenkten Luftdruckphase während des Wendevorganges am Feldende wird dann Saatgut über die Einfüllschleuse aus dem Vorratstank in die Nachfüllleitung eingespeist und über diese in dem Saatgutvorratsbehälter geleitet.

Dieser Vorgang der deskontinuierlichen Nachfüllung ist nur beim Wendevorgang möglich.

Der Erfindung liegt die Aufgabe zugrunde, den Nachfüllvorgang zu vereinfachen und auch während des Vereinzelungsvorganges zu ermöglichen.

Diese Aufgabe wird erfindungsgemäß durch die kennzeichnenden Merkmale des Patentanspruches 1 gelöst. Infolge dieser Maßnahme ist eine kontinuierliche Nachförderung des Saatgutes in dem Vorratsbehälter in den Bereich des Vereinzelungsorgans im Vereinzelungsgehäuse auch während des Vereinzelungs- und Ausbringvorganges möglich. Hierbei wird die kontinuierliche Nachförderung während des Vereinzelungs- und Sävorganges dadurch möglich, dass die benötigte Luft zur Erzeugung der Druckdifferenz zur Vereinzelung der Saatkörner gleichzeitig zur Nachfüllung genutzt wird. Durch den entsprechend ausreichend hohen Luftdruck in der Nachfüllleitung, die dem Luftdruck zur Erzeugung der Druckdifferenz an den Perforationen entspricht, ist es also in überraschender Weise möglich, kontinuierlich während des Vereinzelungs- und Säausbringvorganges das Saatgut kontinuierlich nachzufördern. Diese kontinuierliche Förderung des Saatgutes ist dadurch möglich, dass der von der Nachfüllleitung erzeugte Luftdruck dem Luftdruck im Vereinzelungsbereich der Trommel während des Vereinzelungsvorganges der Saatkörner während der Ausbringarbeit zumindest annähernd entspricht. Die zur Nachfüllung des Saatgutes genutzte Luft wird somit energetisch zur Erzeugung der Druckdifferenz weiter genutzt.

Eine einfache Ausgestaltung des Nachfüllvorganges während des Sä- und Vereinzelungsvorganges lässt sich dadurch erreichen, dass die Nachfüllleitung unmittelbar ohne Zwischenschaltung eines gegenüber dem Saatgutvorratsbehälterbereich des Vereinzelungsgehäuses absperrbaren Zwischenbehälters ausmündet.

Bei einer Einzelkornsämaschine bei dem eine gute Anlagerung und eine gute Vereinzelung der Saatkörner durch die Vereinzelungstrommel mittels eines fließbettartigen Saatgutvorrates im Bereich der Vereinzelungstrommel erzielt wird, ist zur Erzeugung eines Fließbettes des Saatgutes in diesem Bereich vorgesehen, dass dem Vereinzelungsgehäuse eine Vorrichtung zur Erzeugung eines Fließbettes des Saatgutes zumindest im unteren Anlagerungsbereich des Saatgutes an der Vereinzelungstrommel zugeordnet ist, dass in diesem Bereich eine von dem Gebläse mit Überdruck beaufschlagte Luftleitung ausmündet

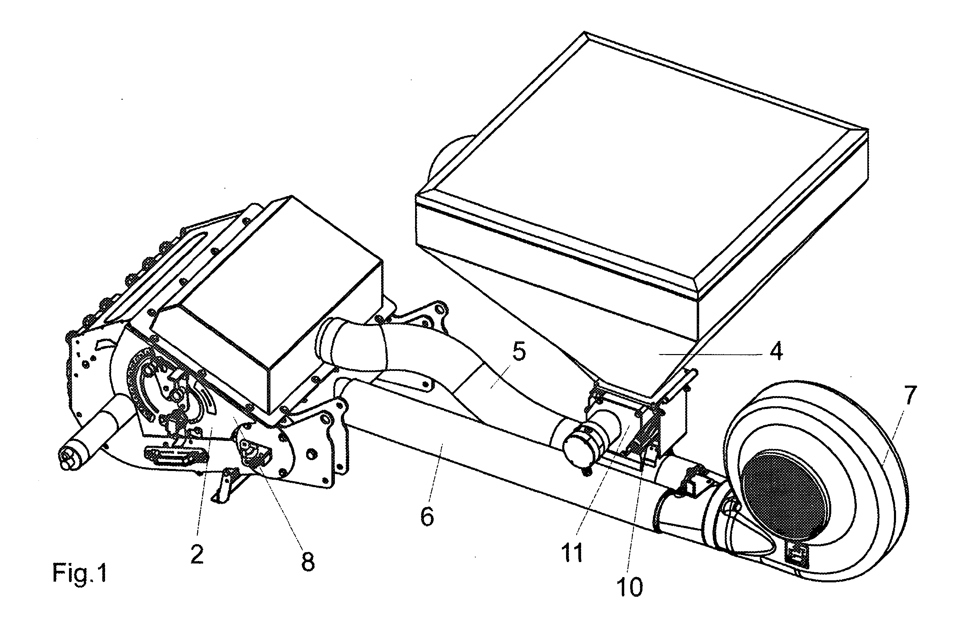

Weitere Einzelheiten der Erfindung sind der Beispielsbeschreibung und den Zeichnungen zu entnehmen.
Hierbei zeigen
- Fig. 1: das erfindungsgemäße Nachfüllsystem in Prinzipdarstellung und perspektivischer Darstellung,

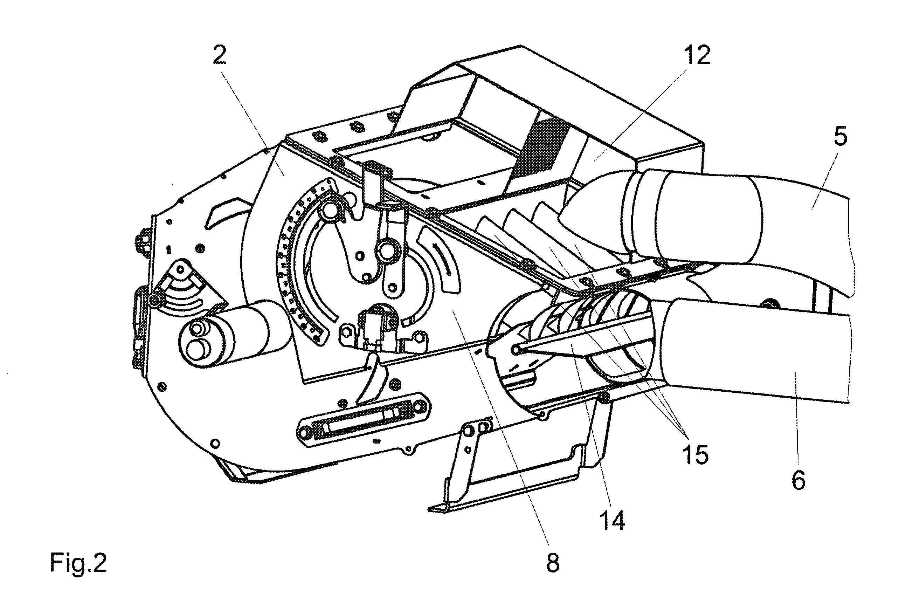

- Fig. 2: die Zuleitung der Nachfüllleitung in das Vereinzelungsgehäuse in perspektivischer Darstellung und vergrößertem Maßstab und teilweise im Schnitt und

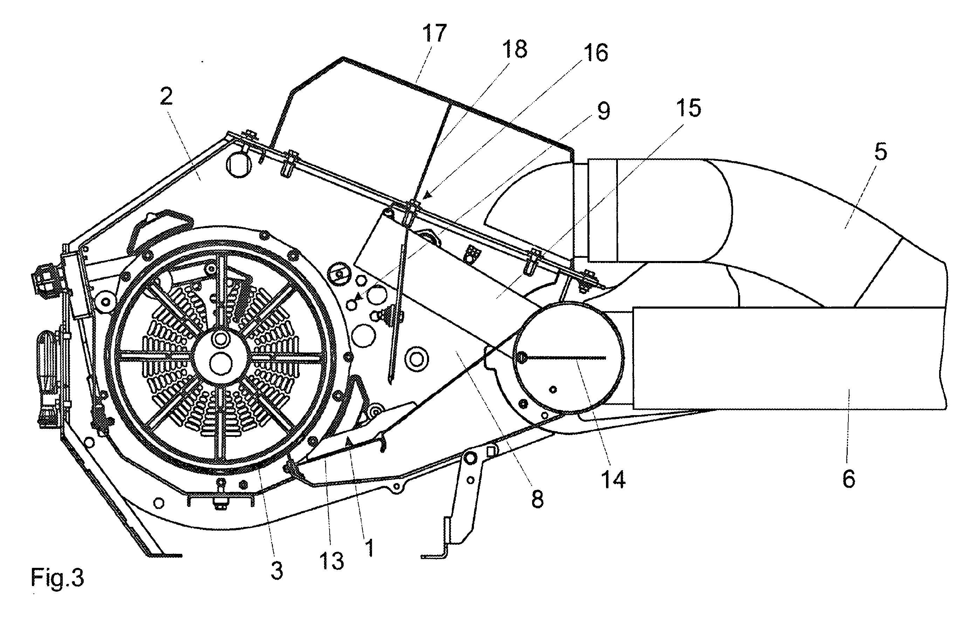

- Fig. 3: die Vereinzelungseinheit in Seitenansicht in Ansicht III/III.

Das erfindungsgemäße Nachfüllsystem für den Saatgutvorratsbereich 1 einer Einzelkornsämaschine, die mit einem Drucksystem arbeitet, weist die in einem Vereinzelungsgehäuse 2 angeordnete Vereinzelungstrommel 3, einen Vorratsbehälter 4, eine pneumatisch beaufschlagte Nachfüllleitung 5 und eine Luftdruckleitung 6 auf. Die Nachfüllleitung 5 und die Luftdruckleitung 6 werden von einem motorisch angetriebenen Gebläse 7 mit einem Luftüberdruck gegenüber dem Atmosphärendruck beaufschlagt.

Die Vereinzelungstrommel 3 weist in bekannter und daher nicht näher dargestellter Weise in Perforationsreihen angeordnete Perforationen auf, die aufgrund über die Nachfüllleitung 5 und Luftdruckleitung 6 zugeführte Luft mit einer Druckdifferenz gegenüber dem Atmosphärendruck beaufschlagt werden. An den Perforationen der Vereinzelungstrommel 3 lagern sich aufgrund der anliegenden Druckdifferenz die Saatkörner aus dem Saatgutvorrat des Saatgutvorratsbereiches 1 des Saatgutvorratsbehälters 8 innerhalb des Vereinzelungsgehäuses 2 an.

Mittels des von dem Gebläse 7 erzeugten Luftstromes und des hieraus resultierenden Luftdruckes, der über die Luftdruckleitung 6 und die Nachfüllleitung 5 in den Vereinzelungsbereich 9 des Vereinzelungsgehäuses 2 geleitet wird, wird die erforderliche Druckdifferenz an den Perforationen der Vereinzelungstrommel 3 erzeugt. Der Nachfüllleitung 5 ist eine Eingabeschleuse 10 zugeordnet, über welche das sich in dem Vorratsbehälter 4, der getrennt von dem Vereinzelungsgehäuse 2 angeordnet ist, über eine Dosiervorrichtung 11 das sich in dem Vorratsbehälter 4 befindliche Saatgut in die Nachfüllleitung 5 eingespeist wird. Mittels der pneumatischen Nachfüllleitung 5 wird ein ständig aufrecht erhaltener Überdruck in dem Vereinzelungsbereich 9 des Vereinzelungsgehäuses 2 in dieser Weise erzeugt, um die Druckdifferenz an den Perforationen der Vereinzelungstrommel 3 zu erzeugen. Somit wird über die Nachfüllleitung 5 in ununterbrochener Weise zumindest teilweise die an den Perforationen der Vereinzelungstrommel 3 anliegende Druckdifferenz, im Ausführungsbeispiel in Verbindung mit der Luftdruckleitung 6 erzeugt. Der von der Nachfüllleitung 5 erzeugte Luftdruck entspricht dem Luftdruck im Vereinzelungsbereich 9 der Trommel 3 während des Vereinzelungsvorganges der Saatkörner bei der Ausbringarbeit.

Wie sich aus dem vorhergehenden ergibt, mündet die Nachfüllleitung 5 unmittelbar ohne Zwischenschaltung eines gegenüber dem Saatgutvorratsbehälter 8 des Vereinzelungsgehäuses (2 absperrbaren Zwischenbehälters im oberen Bereich 12 des Vereinzelungsgehäuses 2 aus.

Der unterste Bereich des Saatgutvorratsbereiches 1 im Vereinzelungsgehäuse 2, welcher von Wandelementen 13 bebildet wird, sind im Bereich der Vereinzelungstrommel 3 als Lochblech ausgebildet. Hierdurch kann ein Teil, der über die Luftdruckleitung 6 dem Vereinzelungsgehäuse 2 zugeführte Luft über die Aussparungen in dem Lochblech 13 in den Vereinzelungsbereich 9 des Vereinzelungsgehäuses 2 hineinströmen. Hierbei wird für das sich in diesem Bereich befindliche Saatgut im Bereich der Vereinzelungstrommel 3 in eine Art Fließbett im unteren Anlagerungsbereich des Saatgutes an der Vereinzelungstrommel 3 erzeugt.

Im Ausführungsbeispiel lässt sich die Luftdruckmenge, die über die Luftdruckleitung 6 dem Vereinzelungsgehäuse 2 zugeführt wird, durch eine einstellbare Luftklappe 14 in einstellbarer Weise in zwei Mengenströme aufteilen. Der eine Mengenstrom wird dem Lochblech 13 zugeleitet während der andere Mengenstrom über Druckrohre 15 in dem oberen Bereich 12 des Vereinzelungsgehäuses 2 ausmündet.

Wie insbesondere der Fg. 2 und 3 zu entnehmen ist, mündet die Nachfüllleitung 5 im oberen Bereich 12 des Vereinzelungsgehäuses 2 in der Weise aus, dass das Saatgut in den Saatgutvorratsbehälterbereich 1 des Vereinzelungsgehäuses 2 gelangt.

Hierbei ist eine Trennwand 16 zwischen Saatgutvorratsbehälterbereich 8 und Vereinzelungstrommel 3 bis an die obere Wand 17 des Vereinzelungsgehäuses 2 geführt. Zumindest der obere Bereich 18 der Trennwand 16 ist luftdurchlässig, beispielsweise siebartig oder als Lochblech ausgebildet.

## Patentansprüche

1. Nachfüllsystem mit zumindest einem mit einem Überdruck beaufschlagten, einen Saatgutvorratsbehälter aufweisenden Vereinzelungsgehäuse (2) einer landwirtschaftlichen Einzelkornsämaschine, wobei dem Vereinzelungsgehäuse (2) zumindest eine mit einer Druckdifferenz beaufschlagte Vereinzelungstrommel (3) zugeordnet ist, wobei die Vereinzelungstrommel (3) in Perforationsreihen angeordnete Perforationen aufweist, an denen sich die Saatkörner bei der Durchführung der Perforationen durch den Saatgutvorratsbehälterbereich anlagern, wobei dem Vereinzelungsgehäuse (2) mittels zumindest einer pneumatisch beaufschlagten und oberhalb des Saatgutvorratsbehälterbereiches im Vereinzelungsgehäuse (2) ausmündenden Nachfüllleitung (5) das sich in einem Vorratsbehälter (4) befindliche Saatgut zugefördert wird, **dadurch gekennzeichnet, dass** über die pneumatische Nachfüllleitung ( 5 ) ein ständig aufrechterhaltener Überdruck in dem Vereinzelungsbereich ( 9 ) des Vereinzelungsgehäuses ( 2 ) erzeugt wird, so dass über die Nachfüllleitung ( 5 ) in ununterbrochener Weise zumindest teilweise die an den Perforationen der Vereinzelungstrommel ( 3 ) anliegende Druckdifferenz erzeugbar ist.

2. Nachfüllsystem nach Anspruch 1, **dadurch gekennzeichnet, dass** der von der Nachfüllleitung ( 5 ) erzeugte Luftdruck dem Luftdruck im Vereinzelungsbereich ( 9 ) der Trommel ( 3 ) während des Vereinzelungsvorganges der Saatkörner während der Ausbringarbeit zumindest annähernd entspricht.

3. Nachfüllsystem nach Anspruch 1, **dadurch gekennzeichnet, dass** die Nachfüllleitung ( 5 ) unmittelbar ohne Zwischenschaltung eines gegenüber dem Saatgutvorratsbehälterbereich ( 8 ) des Vereinzelungsgehäuses ( 2 ) absperrbaren Zwischenbehälters ausmündet.

4. Nachfüllsystem nach Anspruch 1, **dadurch gekennzeichnet, dass** dem Vereinzelungsgehäuse ( 2 ) eine Vorrichtung zur Erzeugung eines Fließbettes des Saatgutes zumindest im unteren Anlagerungsbereich des Saatgutes an der Vereinzelungstrommel ( 3 ) zugeordnet ist, dass in diesem Bereich eine von dem Gebläse ( 7 ) mit Überdruck beaufschlagte Luftleitung ( 6 ) ausmündet.

## Claims

1. Refilling system comprising at least one separating housing (2) of an agricultural single grain sowing machine, which separating housing is charged with an overpressure and comprises a seed storage container, wherein the separating housing (2) is assigned at least one separating drum (3) subjected to a pressure difference, wherein the separating drum (3) has perforations which are arranged in perforation rows and at which the seeds accumulate when the perforations pass through the seed supply container region, wherein the seed situated in a supply container (4) is delivered to the separating housing (2) by means of at least one pneumatically charged refilling line (5) which opens out in the separating housing (2) above the seed supply container region, **characterized in that** a constantly maintained overpressure is generated in the separating region (9) of the separating housing (2) via the pneumatic refilling line (5) such that the pressure difference present at the perforations of the separating drum (3) can be generated at least partially via the refilling line (5) in an uninterrupted manner.

2. Refilling system according to Claim 1, **characterized in that** the air pressure generated by the refilling line (5) at least approximately corresponds to the air pressure in the separating region (9) of the drum (3) during the separating operation of the seeds during distribution.

3. Refilling system according to Claim 1, **characterized in that** the refilling line (5) opens out directly without interposition of an intermediate container which can be shut off with respect to the seed supply container region (8) of the separating housing (2).

4. Refilling system according to Claim 1, **characterized in that** the separating housing (2) is assigned a device for producing a fluidized bed of the seed at least in the lower accumulation region of the seed on the separating drum (3), and **in that** an air line (6) charged with overpressure by the fan (7) opens out in this region.

## Revendications

1. Système de réapprovisionnement comprenant au moins un boîtier de séparation (2) d'un semoir monograine agricole, sollicité avec une surpression, présentant un réservoir de semence, au moins un tambour de séparation (3) sollicité avec une différence de pression étant associé au boîtier de séparation (2), le tambour de séparation (3) présentant des perforations disposées en rangées de perforations, au niveau desquelles s'accumulent les graines à semer au niveau du passage des perforations à travers la région du réservoir de semences, la semence se trouvant dans un réservoir (4) étant acheminée au boîtier de séparation (2) au moyen d'au moins une ligne de réapprovisionnement (5) sollicitée pneumatiquement et débouchant au-dessus de la région du réservoir de semence dans le boîtier de séparation (2), **caractérisé en ce qu'**une surpression maintenue en permanence est produite par le biais de la conduite de réapprovisionnement pneumatique (5) dans la région de séparation (9) du boîtier de séparation (2), de telle sorte que la différence de pression s'appliquant aux perforations du tambour de séparation (3) puisse être produite au moins partiellement de manière ininterrompue par le biais de la conduite de réapprovisionnement (5).

2. Système de réapprovisionnement selon la revendication 1, **caractérisé en ce que** la pression d'air produite par la conduite de réapprovisionnement (5) correspond au moins approximativement à la pression d'air dans la région de séparation (9) du tambour (3) pendant l'opération de réapprovisionnement des graines à semer au cours du travail de distribution.

3. Système de réapprovisionnement selon la revendication 1, **caractérisé en ce que** la conduite de réapprovisionnement (5) débouche directement sans interposition d'un récipient intermédiaire pouvant être bloqué par rapport à la région du réservoir de semence (8) du boîtier de séparation (2).

4. Système de réapprovisionnement selon la revendication 1, **caractérisé en ce que** le boîtier de séparation (2) est associé à un dispositif pour produire un lit fluidisé de la semence au moins dans la région d'accumulation inférieure de la semence sur le tambour de séparation (3), et **en ce qu'**une conduite d'air (6) sollicitée avec une surpression par la soufflante (7) débouche dans cette région.
